Europäisches Patentamt

European Patent Office

Office européen des brevets

(11) Publication number : **0 465 061 A2**

# EUROPEAN PATENT APPLICATION

(21) Application number : **91305626.3**

(22) Date of filing : **21.06.91**

(51) Int. Cl.⁵ : **B01J 23/74,** B01J 35/10, C01B 3/40

(30) Priority : **22.06.90 JP 164432/90**

(43) Date of publication of application : **08.01.92 Bulletin 92/02**

(84) Designated Contracting States : **DE DK FR GB NL**

(71) Applicant : **TOYO ENGINEERING CORPORATION**
**2-5, Kasumigaseki 3-chome**
**Chiyoda-ku, Tokyo 100 (JP)**

(72) Inventor : **Numaguchi, Toru**
**Hondsruglaan 57**
**NL-5628 DB Eindhoven (NL)**

Inventor : **Ohsaki, Kozo**
**3-3, Ohanakita 3-chome**
**Funabashi-shi, Chiba (JP)**
Inventor : **Kikuchi, Katsutoshi**
**1066-8, Takadacho**
**Chiba-shi, Chiba (JP)**
Inventor : **Hirota, Yoshitsugu**
**236-7, Takashi**
**Mobara-shi, Chiba (JP)**
Inventor : **Mochizuki, Noboru**
**2113-2, Tougou**
**Mobara-shi, Chiba (JP)**
Inventor : **Sato, Nobuhiro**
**10-15, Yutaka 2-chome, Minami-ku**
**Nagoya-shi, Aichi (JP)**

(74) Representative : **W.P. Thompson & Co.**
**Coopers Building, Church Street**
**Liverpool L1 3AB (GB)**

(54) **Steam reforming catalyst.**

㊄ A steam reforming process is improved by the use of a catalyst comprising a porous aluminum oxide having a pore volume of pores having a pore diameter ranging from 0.1 to 0.5 micron of not less than 0.2 ml/g and a pore volume of pores having a pore diameter of more than 0.5 micron but not more than 10 microns of not less than 0.05 ml/g and a purity determined upon ignition dryness of not less than 98% by weight, and nickel in an amount of 3 to 20% by weight in terms of nickel oxide based on the total weight of the catalyst, said catalyst being formed by impregnating said porous aluminum oxide with a solution containing nickel, drying the impregnated aluminum oxide and then calcining the dried aluminum oxide.

EP 0 465 061 A2

The present invention relates to a catalyst that is employed in the steam reforming of hydrocarbons or the like with steam to produce a gas mixture comprising hydrogen and carbon monoxide.

It has been previously known that a catalyst comprising a heat-resisting carrier of aluminum oxide, silica, etc., and a catalytically active component of nickel can be employed for reforming hydrocarbons or the like with steam. However, a catalyst of that kind has a drawback in that it has a low activity due to its high diffusion resistance to the reactant into the fine pores of the catalyst and, in addition, it is susceptible to carbon deposition which results in the lowering in the activity of the catalyst.

Japanese patent publication A No. 2-43952, publisbed on February 14, 1990, corresponding to U.S. Serial No. 07/345 430 and 07/620 489, discloses a catalyst for steam reforming comprising a porous body of an alumin mainly composed of $\alpha$-alumina and nickel oxide carried on said porous body. The present inventors have further studied this series of catalysts.

Specifically, in this study, various catalysts were made on an experimental basis by varying the characteristics of the alumina porous body, and their catalytic activities were precisely compared. The variation in the characteristics of the porous body was attained by varying the heat treatment temperature of the porous alumina.

As a result of the study, it has been found that the excellent results in the steam reforming of hydrocarbons etc., intended in the present invention can be attained by a catalyst comprising a porous body of a high purity aluminum oxide comprising an $\alpha$-alumina prepared via $\gamma$-alumina and $\delta$-alumina by heat-treating boehmite alumina as a starting material, said porous body being a porous structured body having an apparent porosity of from 50 to 80%, preferably 50 to 70%, a pore volume of pores having a pore diameter ranging from 0.1 to 0.5 micron of not less than 0.2 ml/g, a pore volume of pores having a pore diameter of more than 0.5 micron but not more than 10 microns of not less than 0.05 ml/g and an aluminum oxide content of not less than 98% by weight, and as an active ingredient, nickel in an amount of 3 to 20% by weight, preferably 5 to 15% by weight, particularly preferably 5 to 10% by weight, in terms of nickel oxide based on the total weight of the catalyst. Though the temperature of conversion to $\alpha$-alumina has been believed to be from about 1,150 to 1,200°C, the heat treatment temperature adopted to make the catalyst carrier in the examples which will be described later was 1,300°C ± about 40°C. This heat treatment may be performed preferably at a temperature from 1,200 to 1,380°C, and further preferably from 1,250 to 1,350°C. In general, a greater number of the finer pores and a larger surface area of the catalyst carrier are obtained when the heat treatment temperature is below this range, and a smaller number of the finer pores and a smaller surface area of the carrier are obtained when this temperature is above this range. Both cases result in making it difficult to make a catalyst carrier suitable for the present invention. The heat treatment for the conversion to $\alpha$-alumina is accomplished in an oxidative atmosphere represented by air.

The above-described conversion treatment is performed for a sufficient period of time, generally from three to five hours, preferably from two to four hours, with appropriate temperature rise and lowering time.

There is no specified upper limit as to the pore volume of the pores having a pore diameter ranging from 0.1 to 0.5 micron and the pores having a pore diameter of more than 0.5 micron but not more than 10 microns. However it is favorable to keep them not greater than 0.5 ml/g and 0.3 ml/g, respectively, in order to give the above-described apparent porosity range and, at the same time, to give a certain practical compression strength to the carrier and eventually to the catalyst of the present invention.

$\alpha$-Alumina may be made by calcining an alumina trihydrate such as aluminas produced by electrical fusion, bialite and gibbsite. The catalytic activity intended in the present invention cannot, however, be obtained by utilizing them as the carrier, since aluminas made as such have, in general, no such structures of pores as specified above.

The catalyst of the present invention is suitable for the reforming of lower hydrocarbons such as methane.

There is no specific limitation on the procedure for supporting the nickel component on the porous body of $\alpha$-alumina. Since the catalyst of the present invention participates in the reaction to a far deeper inside portion than the conventional catalyst by virtue of its unique carrier structure, it is desirable to distribute the active component, nickel, homogeneously into the porous alumina surface area as widely as possible. A well-known procedure of immersing the carrier in a solution of a nickel salt is appropriate.

Active alumina having the aforementioned characteristics is, for instance, immersed in an aqueous solution of nickel nitrate. After the aqueous solution is impregnated into the alumina to reach the center of the porous body, the alumina is dried first at ambient temperature and then at about 100 to 130°C. The so-treated alumina is then further heat-treated (calcined) to give the catalyst of the present invention.

All or a part of the impregnated nickel is converted to $NiAl_2O_4$ (nickel aluminate) by, for example, calcining the force-dried material under a stream of an oxidative atmosphere (e.g., under a stream of air).

The calcination temperature is preferably from 600 to 1200°C, more favorably 800 to 920°C, and most favorably from 850 to 900°C. The activity of the catalyst decreases when the calcining temperature is above this

EP 0 465 061 A2

range, whereas the activity of the catalyst, which is high enough initially, is gradually lost along with the time of utilization thereof when the calcining temperature is below this range.

A suitable time for the calcination is from one to ten hours. A longer calcination time is favorable when a larger amount of nickel is to be carried or when the calcination temperature is lower. Generally, a calcination for from about 4 to 8 hours at from 850 to 900°C suffices for obtaining a catalyst wherein nickel is carried in an amount of 8% by weight in terms of nickel oxide.

The calcination is carried out in an oxidative atmosphere such as air.

Incidentally, this calcination may be accomplished for such carriers having nickel carried thereon which have been insufficiently calcined, at least partially before the application of the catalyst, in the reactor where it is packed and utilized, for instance, if circumferences permit.

The amount of $NiAl_2O_4$ formed is determined as follows. The catalyst is analyzed by X-ray diffraction analysis and the NA ratio is obtained. The NA ratio is defined as a ratio of the peak area of $NiAl_2O_4$ at $2\theta = 65.7°$ to that of $\alpha$-alumina at $2\theta = 37.7°$, wherein a peak area is obtained as the half width multiplied by the height, both being at their peak [(half-width) x (height)]. The NA ratio of the catalyst of the present invention is favorably from about 0.1 to 0.7, and more favorably from about 0.3 to 0.5.

The reduction of the catalyst of the present invention when the catalyst is used is favorably accomplished at a temperature of from about 700 to 800°C in a stream of methane and steam for eight to forty-eight hours. If circumstances allow, the reduction on the application in the steam reforming reactor may be reduced to a degree as adopted in conventional catalyst by reducing the catalyst of the present invention in advance of the packing thereof into the reactor.

In the catalyst of the present invention, it is believed that far less deactivation of the catalyst due to the deposition of carbon occurs than in conventionally available catalysts, even without any addition of an alkali metal element or the like, because the active nickel, which has been converted from nickel oxide or nickel aluminate by predetermined reduction before utilization of the catalyst, is homogeneously distributed through $NiAl_2O_4$ (nickel aluminate) on a carrier having specified pores similar to those shown in JP-A 2-43952.

Although addition of an alkali metal element or the like is not necessary for the catalyst of the present invention, it may be added in such an amount as will not spoil the object of the present invention.

The present invention will now be described in more detail by way of the following Examples, though it is not limited to these Examples only.

## Example 1

Porous body particles of an $\alpha$-alumina of an average particle diameter of 5 mm having such a pore structure that the pore volume of pores having a pore diameter ranging from 0.1 to 0.5 micron was 0.22 ml/g and the pore volume of pores having a pore diameter of more than 0.5 micron but not more than 10 microns was 0.07 ml/g were immersed in 1 liter of an aqueous solution of 1.3 kg of nickel nitrate [$Ni(NO_3)_2 \cdot 6H_2O$] in water and dried for about 24 hours at an ambient temperature. The particles were further dried by heating at 120°C for six hours, then the temperature was raised to from 850°C to 900°C in from five to six hours, and the particles were kept at this temperature for five hours for calcination, thereby preparing the catalyst of the present invention.

The catalyst thus obtained contained 8.6% by weight of nickel in terms of nickel oxide. The catalyst's NA ratio was 0.46. This catalyst will be hereinafter referred to as "Catalyst A".

A catalyst having the same nickel content as that of Catalyst A was obtained in the same way as Catalyst A, except that the temperature rise time, the calcination temperature and the calcination time were five hours, from 560 to 580°C and ten hours, respectively. This catalyst will be hereinafter referred to as "Catalyst A-1". The NA ratio for Catalyst A-1 was 0.08.

A catalyst having the same nickel content as that of Catalyst A was obtained in the same way as Catalyst A, except that the temperature rise time, the calcination temperature and the calcination time were six hours, from 1,200 to 1,250°C and four hours, respectively. This catalyst will be hereinafter "Catalyst A-2". The NA ratio far Catalyst A-2 was 1.0.

Further, the following Catalyst B, Catalyst C and Catalyst D were prepared.

## Catalyst B

Porous body particles of an $\alpha$-alumina of an average particle diameter of 5 mm having a pore structure that the pore volume of pores having a pore diameter ranging from 0.1 to 0.5 micron was 0.05 ml/g and the pore volume of pores having a pore diameter of more than 0.5 micron but not more than 10 microns was 0.2 ml/g were subjected to the same treatment as that in the case of Catalyst A of Example 1, thereby preparing

3

a catalyst having a nickel content of 8.6% by weight in terms of nickel oxide. The NA ratio was 0.44.

Catalyst C

Porous body particles of an α-alumina of an average particle diameter of 5 mm having such a pore diameter that the pore volume of pores having a pore diameter ranging from 0.1 to 0.5 micron was 0.21 ml/g and the pore volume of pores having a pore diameter of more than 0.5 micron was 0 ml/g were subjected to the same treatment as that in the case of Catalyst A of Example 1, thereby preparing a catalyst having a nickel content of 8.6% by weight in terms of nickel oxide. The NA ratio was 0.42.

Catalyst D

Porous body particles of an α-alumina of an average particle diameter of 5 mm having such a pore structure that the pore volume of pores having a pore diameter ranging from 0.1 to 0.5 micron was 0.23 ml/g, the pore volume of pores having a pore diameter of more than 0.5 micron but not more than 10 microns was substantially zero and the pore volume of pores having a pore diameter exceeding 10 microns was 0.06 ml/g were subjected to the same treatment as that in the case of Catalyst A of Example 1, thereby preparing a catalyst having a nickel content of 8.6% by weight in terms of nickel oxide. The NA ratio was 0.42.

Each of the above catalysts was packed into a reactor tube with an inside diameter of 12.3 mm, then the temperature of the catalyst bed was raised to 800°C, and then each of the catalysts was reduced for twenty hours with steam and methane at a S/C ratio, i.e., a ratio of the number of moles of steam to the number of carbon atoms of methane, of 7.0 and at a space velocity $SV_0$ of 1,000 $h^{-1}$. Thereafter, each catalyst was utilized for a steam reforming experiment. Methane and steam were fed into the reaction tube under conditions of a S/C of 3.0, a reaction pressure P of 0.2 kg/cm²·G and a $SV_0$ of 8,000 $h^{-1}$.

The reaction product of each experiment was recovered through a cooler and a gas meter and then analyzed by gas chromatography. The reaction had been performed continuously for five hundred hours. The results are shown in Table 1. The reaction time 0 (zero) means the starting point of the reaction which is right after the reduction treatment mentioned above, and "approach temperature" is the difference between the equilibrium temperature calculated from the measured composition of the reaction product and the actually measured temperature.

## Table 1

| Cata-<br>list | Reac-<br>tion<br>time<br>(hr) | Reac-<br>tion<br>temp.<br>(°C) | Approach<br>temp. in<br>steam<br>reforming<br>with methane<br>(°C) | Composition of reaction<br>product gas<br>(vol.%) | | | |
|---|---|---|---|---|---|---|---|
| | | | | $H_2$ | CO | $CO_2$ | $CH_4$ |
| A | 0 | 690 | 23. 6 | 75. 6 | 13. 0 | 9. 2 | 2. 2 |
| | 500 | 690 | 23. 6 | 75. 6 | 13. 0 | 9. 2 | 2. 2 |
| A-1 | 0 | 690 | 30. 9 | 75. 4 | 12. 8 | 9. 2 | 2. 6 |
| | 500 | 690 | 150. 0 | 62. 0 | 9. 9 | 7. 6 | 20. 5 |
| A-2 | 0 | 690 | 67. 2 | 73. 3 | 11. 5 | 9. 7 | 5. 5 |
| B | 0 | 690 | 40. 7 | 74. 0 | 16. 5 | 6. 1 | 3. 4 |
| C | 0 | 690 | 43. 4 | 74. 9 | 12. 2 | 9. 5 | 3. 4 |
| D | 0 | 690 | 61. 9 | 73. 9 | 11. 1 | 10. 2 | 4. 9 |

Catalyst A exhibited a catalytic activity close to the equilibrium value and substantially no lowering of the activity.

Catalyst A-1 exhibited a high initial activity but suffered a remarkable lowering in activity.

Catalyst A-2 had somewhat less initial activity. The somewhat less initial activity could be attributed to the lower content of effective nickel due to the conversion of most of the deposited NiO into $NiAl_2O_4$.

Catalyst B exhibited a low activity because altbough its pore volume of pores having a pore diameter of 0.5 to 10 microns was not less than 0.05 ml/g, it satisfied only one requirements of the invention in the pore structure.

Catalyst C exhibited a low activity because although it had a pore volume of pores having a pore diameter of 0.1 to 0.5 $\mu$m of 0.2 ml/g or more, the pore structure was such that only one of the requirements was satisfied.

Catalyst D exhibited a low activity because although it had a pore volume of pores having a pore diameter of 0.1 to 0.5 $\mu$m of 0.2 ml/g or more, the pore structure was such that the other requirements specified in the present invention were not satisfied.

Example 2

Regarding Catalyst A and the following Catalyst E, the activity for reforming n-hexane with steam and the change of activity with time were determined. The reaction conditions were the same as those of Example 1. The experimental results are given in Table 2.

Catalyst E

Porous body particles of an active alumina of an average particle diameter of 5 mm having such a pore structure that the pore volume of pores having a pore diameter ranging from 60 to 120 Å was 0.42 ml/g and the pore volume of pores having pore diameter of more than 120 Å was 0.13 ml/g were subjected to the same treatment as that in the case of Catalyst A of Example 1, except that the calcination was conducted at 500°C for three hours, thereby preparing a catalyst having a nickel content of 8.6% by weight in terms of nickel oxide. The NA ratio was zero.

## Table 2

| Cata-list | Reac-tion time (hr) | Reaction temp. (°C) | Composition of reaction product gas (vol.%) | | | |
|---|---|---|---|---|---|---|
| | | | $H_2$ | CO | $CO_2$ | $CH_4$ |
| A | 0 | 700 | 70.6 | 13.5 | 13.7 | 2.2 |
| | 500 | 700 | 70.6 | 13.5 | 13.7 | 2.2 |
| E | 0 | 700 | 70.9 | 14.3 | 13.1 | 1.8 |
| | 500 | 700 | 58.5 | 10.6 | 15.3 | 15.6 |

Both Catalyst A and Catalyst E exhibited a high initial activity. However, a remarkable lowering in the activity was observed in the case of Catalyst E, whereas Catalyst A exhibited no lowering in the activity.

## Claims

1. A catalyst for use in a steam reforming process, which comprises a porous aluminum oxide having a pore volume of pores having a pore diameter ranging from 0.1 to 0.5 micron of not less than 0.2 ml/g and a pore volume of pores having a pore diameter of more than 0.5 micron but not more than 10 microns of not less than 0.05 ml/g and a purity determined upon ignition dryness of not less than 98% by weight, and nickel in an amount of 3 to 20% by weight in terms of nickel oxide based on the total weight of the catalyst, said catalyst being formed by impregnating said porous aluminum oxide with a solution containing nickel, drying the impregnated aluminum oxide and then calcining the dried aluminum oxide.

2. The catalyst as claimed in Claim 1, in which at least part of the nickel is in the form of nickel aluminate having the formula: $NiAl_2O_4$.

5

3. A steam reforming process characterized by the use of the catalyst as defined in Claim 1.